# FASCICULE DE BREVET EUROPEEN

(11) **EP 2 149 099 B1**
(45) Date de publication et mention de la délivrance du brevet: **12.01.2011**
(21) Numéro de dépôt: 08805903.5
(22) Date de dépôt: 30.05.2008
(51) Int. Cl.: G06F 17/30, G06K 9/00, H04N 1/32, G06T 7/00

(54) **DISPOSITIF ET METHODE DE TRAITEMENT D'IMAGES POUR DETERMINER UNE SIGNATURE D'UN FILM**
VORRICHTUNG UND VERFAHREN ZUR VERARBEITUNG VON BILDERN ZUR BESTIMMUNG DER SIGNATUR EINES FILMS
DEVICE AND METHOD FOR PROCESSING IMAGES TO DETERMINE A SIGNATURE OF A FILM

(30) Priorité: 30.05.2007 FR 0755331
(43) Date de publication de la demande: 03.02.2010
(73) Titulaire: FRANCE TELECOM, 75015 Paris (FR)
(72) Inventeur: LANCIERI, Luigi, F-14210 Evrecy (FR)
(74) Mandataire: Desormiere, Pierre-Louis
(86) Numéro de dépôt international: PCT/FR2008/050960
(87) Numéro de publication internationale: WO 2008/149047

(56) Documents cités:
- B IONESCU ET AL.: "Analyse et caractérisation de séquences de films d'animation" , [Online] 2005, XP002479938 Extrait de l'Internet: URL:http://orasis2005.univ-bpclermont.fr/p apers/042.pdf> [extrait le 2008-05-13] cité dans la demande
- HASSEN HADDAD: "Indexation et modèles de données multimedia" RAPPORT DE DEA D'INFORMATIQUE, 20 juin 1994 (1994-06-20), pages 1-57, XP002479987 Grenoble

## Description

### Domaine technique de l'invention

L'invention se rapporte au domaine de traitement d'images. Plus précisément, l'invention concerne l'utilisation d'un traitement d'images, notamment de séquences vidéo, pour déterminer une signature d'un document visuel animé, par exemple un film ou une vidéo quel que soit le format et le type de codage (numérique, mpeg, divx, etc.).

### Arrière-plan de l'invention

Afin d'obtenir une caractéristique représentative du rythme visuel d'une vidéo, il est connue des méthodes qui exploitent des propriétés sémantiques locales. Ces propriétés comportent par exemple, l'identification des plans, scènes, ou mouvements d'objets, incrustation de texte, et reconnaissance de formes ou de visages.

En effet, les principaux travaux en indexation vidéo passent soit par une description de l'ensemble du document soit par la détection de ruptures ou de discontinuités dans le film. Ces discontinuités peuvent porter sur le mouvement, la couleur, etc. Cette approche impose de parcourir tout le film à la recherche de ces discontinuités ce qui est lourd et très coûteux en temps.

Un autre aspect très coûteux en termes de ressources des techniques habituelles est l'identification et le choix des images clés dans chaque plan. Les images clés sont définies comme les images les plus significatives.

Ainsi, ces techniques cherchent à identifier des trajectoires d'objets, du texte, des fonctions des personnages par le costume, reconnaissances de visages, mouvements du corps humain, etc. Par exemple on identifie qu'une vidéo traite de sport lorsqu'on capture les mouvements de balles, ou des joueurs. On s'intéresse dans ces techniques à des descripteurs locaux qui ont un sens (balle, joueurs, etc.).

A l'opposé de ces techniques on trouve aussi des méthodes rapides d'inspiration statistique comme la macro segmentation qui prend en compte les caractéristiques statistiques du signal, par exemple des données audio ou vidéo de très bas niveau.

Par exemple, il est connu un document concernant une analyse de la rythmique d'un film publié par B. Ionescu et al. intitulé « Analyse et caractérisation de séquences de films d'animation » (Orasis 2005). Ce document met en oeuvre une technique qui calcule des moyennes et écarts entre différents plan d'un film. Cependant, cette méthode utilise des plans espacés de plusieurs dizaines de secondes et dont la détection nécessite une algorithmique très complexe.

### Objet et résumé de l'invention

La présente invention concerne une méthode de traitement d'images pour déterminer au moins une signature d'un film, cette méthode comportant une étape de sélection de manière chronologique d'une suite d'images dudit film, une étape d'évaluation des écarts relatifs à au moins un descripteur correspondant à une propriété physique entre des images consécutives afin d'obtenir des écarts visuels primaires, une étape de calcul des différences entre lesdits écarts visuels primaires pour déterminer des écarts visuels secondaires, une étape de calcul des différences entre lesdits écarts visuels secondaires pour déterminer des écarts visuels tertiaires, et une étape de détermination d'une moyenne et d'un écart type des écarts visuels primaires, secondaires, et tertiaires pour obtenir la signature du film.

Ainsi, on réalise un échantillonnage statistique basé uniquement sur un critère temporel sur des discontinuités visuelles entre les images pour obtenir une caractéristique représentative du rythme visuel du film de manière simple et rapide. On peut se satisfaire d'un échantillonnage limité sachant qu'un film présente une forte cohérence interne. En outre, la première signature permet de caractériser le film d'une manière synthétique et globale.

Selon un aspect de la présente invention, la suite d'images comporte un nombre P déterminé de groupes d'images selon un taux de couverture prédéterminé du film, chaque groupe d'images comportant un nombre N prédéterminé d'images.

Ainsi, le film peut être segmenté de manière simple et rapide sans référence à des plans ou des images clés.

Selon un autre aspect de la présente invention, pour chaque groupe de N images on évalue N écarts visuels primaires, à partir desdits N écarts visuels primaires, on calcule N-1 écarts visuels secondaires, à partir des N-1 écarts visuels secondaires, on calcule N-2 écarts visuels tertiaires, on détermine une moyenne et un écart type des écarts visuels primaires, secondaires, et tertiaires à partir des N écarts visuels primaires, N-1 secondaires, et N-2 tertiaires obtenus pour les P groupes d'images.

Selon un autre aspect de la présente invention, les groupes d'images sont espacés entre eux selon un premier écart temporel, et les images dans chacun des groupes d'images sont espacées entre elles selon un second écart temporel.

Dans une variante de l'invention le premier écart temporel est calculé pour chaque film en fonction de différents paramètres dont la durée du film et le taux de couverture désiré et le second écart temporel peut être prédéfini et applicable à chaque film de manière identique.

Ainsi, les images sélectionnées couvrent le film de manière relativement homogène ce qui simplifie l'échantillonnage et améliore la caractérisation du film.

Ledit au moins un descripteur correspond à un descripteur de luminance, de mouvement, de forme géométrique, ou de couleur.

Ainsi, il suffit d'exploiter des propriétés physiques très simple à mettre en ouvre pour caractériser le film de manière précise.

A titre d'exemple, ledit au moins descripteur est choisi parmi les descripteurs suivants :
- descripteur de luminance permettant de calculer un écart visuel primaire entre deux images consécutives dans chaque groupe d'images d'un ratio entre le nombre de pixels sombre et le nombre de pixels clairs dans chaque image,
- descripteur de mouvement permettant de calculer un écart visuel primaire correspondant à un recouvrement de contours ou de formes dominantes entre deux images consécutives dans chaque groupe d'images, et
- descripteur d'ambiance permettant de calculer un écart visuel primaire correspondant à une variation de couleur entre deux images consécutives dans chaque groupe d'images.

Ces descripteurs sont très simples à mettre en oeuvre et dont l'exploitation statistique permet de déterminer la signature du film de manière simple et rapide.

L'invention vise aussi un dispositif de traitement d'images pour déterminer au moins une signature d'un film, caractérisé en ce qu'il comporte des moyens de sélection pour sélectionner de manière chronologique une suite d'images dudit film; des moyens d'évaluation agencés pour évaluer des écarts relatifs à au moins un descripteur correspondant à une propriété physique entre des images consécutives afin d'obtenir des écarts visuels primaires; des moyens de calcul agencés pour calculer des différences entre lesdits écarts visuels primaires pour déterminer des écarts visuels secondaires; des moyens de calcul agencés pour calculer des différences entre lesdits écarts visuels secondaires pour déterminer des écarts visuels tertiaires, et des moyens de détermination agencés pour déterminer une moyenne et un écart type des écarts visuels primaires, secondaires, et tertiaires pour obtenir la signature du film.

### Brève description des dessins

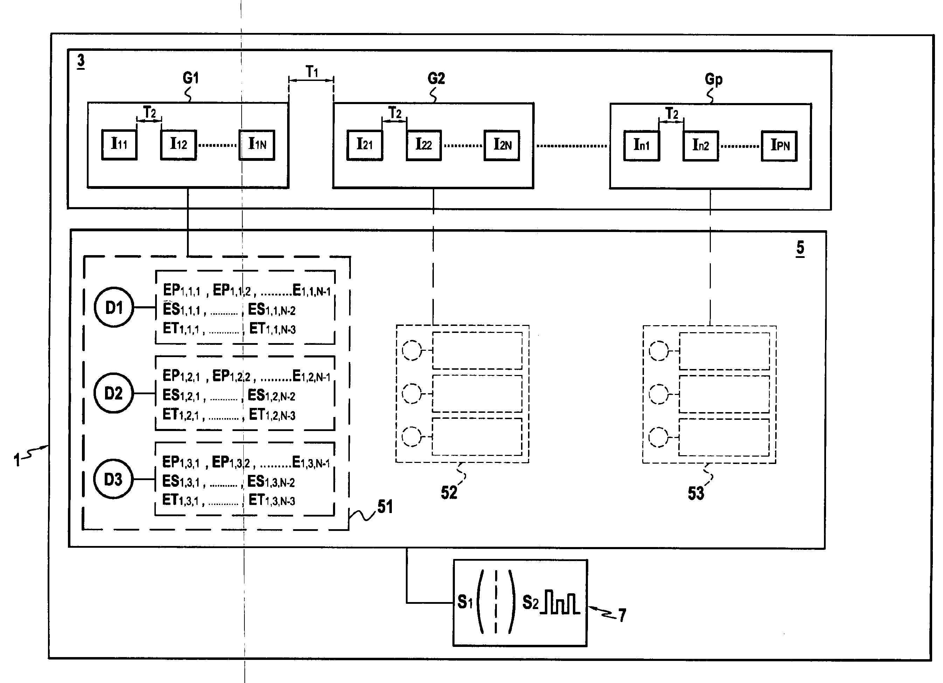

D'autres particularités et avantages de l'invention ressortiront à la lecture de la description faite, ci-après, à titre indicatif mais non limitatif, en référence au dessin unique annexé, illustrant une vue schématique d'un dispositif de traitement d'images pour déterminer une signature d'un film, selon l'invention.

### Description détaillée de modes de réalisation

Conformément à l'invention, l'unique figure illustre un exemple d'un dispositif 1 de traitement d'images pour déterminer une signature d'un film comportant des moyens de sélection 3, des moyens de définition 5 et des moyens d'exploitation 7. On notera que cette figure est également une illustration des principales étapes de la méthode de traitement d'images selon l'invention pour déterminer une signature d'un film.

Les moyens de sélection 3 sélectionnent de manière chronologique une suite d'images I₁₁, I₁₂, ...I_{PN} du film. La sélection des images fait uniquement référence à des écarts chronologiques T₁, T₂ indépendamment des plans ou scènes ou de tout autre découpage du film. Les moyens de définition 5 définissent au moins un descripteur D₁, D₂, D₃ pour évaluer des écarts visuels EP_{1,1,1},..., ES_{1,1,1},...,ET_{1,1,1},...,ET_{1,3,N-3} entre ces images I₁₁, I₁₂, ... I_{PN}.

Finalement, les moyens d'exploitation 7 exploitent statistiquement ces écarts visuels associés au descripteur D₁, D₂, D₃ pour déterminer la signature S₁, S₂ du film ainsi que sa classification.

Ainsi, les écarts entre ces images I₁₁, I₁₂,...I_{PN}, qui sont sélectionnées sur une base temporelle T₁, T₂, peuvent être considérés comme des discontinuités dans les événements du film. L'échantillonnage statistique de ces discontinuités permet d'obtenir une caractéristique plus générale représentative du rythme visuel du film.

La segmentation du film en une suite d'images I₁₁, I₁₂, ...I_{PN} indexées sur la chronologie du film peut comporter un nombre P déterminé de groupes d'images G₁,..., G_{P} selon un taux de couverture prédéterminé du film. Par ailleurs, chaque groupe d'images peut comporter un nombre N prédéterminé d'images I₁₁, I₁₂,...I_{1N}. Les groupes d'images G₁,.., G_{P} sont espacés entre eux selon un premier écart temporel T₁ (dans l'exemple de la figure, le premier écart temporel T₁ est constant) et les images I₁₁, I₁₂,...I_{PN} dans chacun des groupes d'images G₁,..., G_{P} sont espacées entre elles selon un second écart temporel T₂ (dans l'exemple de la figure, le second écart temporel T₂ est constant). Avantageusement, chacun des premier et/ou second écarts temporels T₁, T₂ est paramétrable et peut avoir une durée de base fixe pour tout le film.

On notera que le premier écart temporel T₁ peut être calculé pour chaque film en fonction de différents paramètres dont la durée du film et le taux de couverture désiré et le second écart temporel T₂ peut être prédéfini et applicable à chaque film de manière identique.

A titre d'exemple, chaque groupe d'images G₁,..., G_{P} peut être composé de quatre images (N=4) espacées entre elles par un premier écart temporel T₂ relativement faible (par exemple, de l'ordre de 500ms).

D'une manière générale, le nombre et l'espacement temporel T₁ des différents groupes d'images G₁,..., G_{P} peuvent être choisis de manière à ce que ces groupes soient de préférence, (mais non nécessairement) équi-répartis avec un certain taux de couverture du film. Par exemple, pour un film qui dure une heure, si chaque groupe d'images G₁,..., G_{P} occupe un espace temporel de trois secondes et que l'on souhaite un taux de couverture de 10% alors, on extrait 120 groupes d'images G₁,..., G₁₂₀ (P= 120) séparés entre eux deux-à-deux de 27 secondes (premier écart temporel T1=27s). Ainsi, le premier écart temporel T₁ correspond à une durée d'équi-répartition qui permet de couvrir le film de manière relativement homogène.

On notera que chaque groupe d'images G₁,..., G_{P} fait l'objet d'un traitement identique pour extraire une série de caractéristiques de chacun de ces groupes d'images. Les caractéristiques ou descripteurs D₁, D₂, D₃ extraites d'un groupe d'images sont analysées par des différences entre les images I₁₁, I₁₂,...I_{PN} composant le groupe. Chacun des descripteurs D₁, D₂, D₃ évalue l'écart d'une propriété physique entre deux images consécutives I₁₁, I₁₂ du groupe d'images. Ainsi, chaque descripteur permet d'évaluer pour chaque groupe d'images un nombre N-1 déterminé d'écarts visuels primaires.

Plus particulièrement, l'exemple de la figure montre une évaluation des écarts visuels 51, 52, 53 pour chacun des groupes et seule l'évaluation 51 du premier groupe G₁ est illustrée avec plus de détail.

Par exemple, pour le groupe G₁, le descripteur D₁ évalue N-1 écarts visuels primaires EP_{1,1,1},...,EP_{1,1,N-1}, le descripteur D₂ évalue un autre N-1 écarts visuels primaires EP_{1,2,1},...,EP_{1,2,N-1}, et le descripteur D₃ évalue encore un autre N-1 écarts visuels primaires EP_{1,3,1},...,EP_{1,3,N-1}. D'une manière générale, pour un groupe G₁, un descripteur Dₖ évalue N-1 écarts visuels primaires EP_{i,k,1},...,EP_{i,k,N-1}.

A titre d'exemple, le descripteur peut correspondre à un descripteur de luminance D₁, de mouvement D₂, d'ambiance ou de couleur D₃, de forme géométrique, ou un tout autre type de descripteur. Le descripteur de luminance D₁ permet de calculer un écart visuel primaire entre deux images consécutives dans chaque groupe d'images G₁,.., G_{P} d'un ratio entre le nombre de pixels sombre et le nombre de pixels clairs dans chaque image (par exemple, EP_{1,1,1} pour le groupe G₁ et pour les images consécutives I₁₁, I₁₂). Le descripteur de mouvement D₂ permet de calculer un écart visuel primaire entre deux images consécutives dans chaque groupe d'images G₁,..., G_{P} d'un recouvrement entre contours ou formes dominantes entre deux images successives de chaque groupe (par exemple, EP_{1,2,1} pour le groupe G₁ et pour les images consécutives I₁₁, I₁₂). Finalement, le descripteur d'ambiance D₃ permet de calculer un écart visuel primaire entre deux images consécutives dans chaque groupe d'images d'une variation de couleurs (par exemple, EP_{1,3,1} pour le groupe G₁ et pour les images consécutives I₁₁, I₁₂).

Par ailleurs pour exploiter statistiquement les écarts visuels, on calcule des différences entre les écarts visuels primaires (par exemple, EP_{1,1,1},..., EP_{1,1,N-1} pour le groupe G₁ et le descripteur D₁) pour déterminer un nombre N-2 déterminé d'écarts visuels secondaires (par exemple, ES_{1,1,1},..., ES_{1,1,N-2} pour le groupe G₁ et le descripteur D₁). D'une manière générale, pour un groupe G₁ et un descripteur Dₖ, on calcule N-2 écarts visuels secondaires ES_{i,k,1},..., ES_{i,k,N-2}.

Ensuite, on calcule des différences entre les écarts visuels secondaires (par exemple, ES_{1,1,1},...,ES_{1,1,N-2} pour le groupe G₁ et le descripteur D₁) pour déterminer un nombre N-3 déterminé d'écarts visuels tertiaires (par exemple, ET_{1,1,1},..., ET_{1,1,N-3} pour le groupe G₁ et le descripteur D₁). D'une manière générale, pour un groupe G₁ et un descripteur Dₖ, on calcule N-3 écarts visuels tertiaires ET_{i,k,1},..., ET_{i,k,N-3}.

Afin de caractériser le film d'une manière synthétique et globale on détermine pour l'ensemble des groupes d'images G₁,..., G_{P} la moyenne et l'écart type des écarts visuels primaires, secondaires, et tertiaires associés à chaque descripteur D₁, D₂, D₃ pour obtenir une première signature S₁ du film.

En outre, afin de caractériser le film d'une manière analytique, on classifie les écarts visuels primaires, ou secondaires, ou tertiaires associées à chaque descripteur D₁, D₂, D₃ pour obtenir une seconde signature S₁ du film.

Ainsi, selon l'exemple où chaque groupe d'images est composé de quatre images I₁₁, I₁₂, I₁₃, I₁₄ (N=4 et P=1), on calcule trois écarts visuels primaires par groupe et pour chaque descripteur D₁, D₂, D₃ (par exemple, EP_{1,1,1}, EP_{1,1,2}, EP_{1,1,3} pour le groupe G₁ et le descripteur D₁). A partir de ces écarts visuels primaires, on calcule deux écarts visuels secondaires par groupe et pour chaque descripteur (par exemple, ES_{1,1,1}= EP_{1,1,1}-EP_{1,1,2} et ES_{1,1,2}= EP_{1,1,2}-EP_{1,1,3} pour le groupe G₁ et le descripteur D₁). De la même manière on calcule un écart visuel tertiaire par groupe et pour chaque descripteur à partir des deux écarts visuels secondaires (par exemple, ET_{1,1,1}=ES_{1,1,1}-ES_{1,1,2} pour le groupe G₁ et le descripteur D₁). La statistique réalisée sur les écarts visuels primaires, secondaires et tertiaire permet de modéliser la vitesse et l'accélération des événements dans le film.

Par exemple, dans le cas d'un film comportant 100 groupes G₁,.., G₁₀₀, afin d'obtenir une signature très synthétique on calcule pour chaque descripteur Dₖ, la moyenne et l'écart type de l'ensemble des 300 écarts visuels primaires EP_{1,k,1},...,EP_{100,k,3} (3 écarts x 100 groupes), des 200 écarts visuels secondaires ES_{1,k,1},...,ES_{100,k,2} (2 écarts x 100 groupes), et des 100 écarts visuels tertiaires ET_{1,k,1},..., ET_{100,k,1} (1 écart x 100 groupes). Le film est donc finalement décrit pour les trois descripteurs D₁, D₂, D₃ par une signature S₁ correspondant à un vecteur de 18 valeurs comprenant 9 moyennes et 9 écarts types.

Par ailleurs, afin d'obtenir une signature plus détaillée, toujours selon l'exemple d'un film comportant 100 groupes G₁,..., G₁₀₀, on détermine la répartition des classes de la valeur des écarts pour chacun des trois descripteurs D₁, D₂, D₃. On détermine trois histogrammes par descripteur. Ainsi, pour un descripteur D₁, on détermine la répartition en classe ou histogramme S₂ de 300 écarts visuels primaires, de 200 écarts visuels secondaires et de 100 écarts visuels tertiaires. Le film peut alors être décrit par un ensemble de 9 histogrammes (un par couple descripteur (D1-D3) - type de caractéristique (primaire, secondaire, tertiaire)).

Une fois calculés, les éléments des signatures S₁, S₂ peuvent être utilisés tels quels pour comparer deux films ou être utilisés avec des algorithmes de catégorisation pour segmenter en classes une grande quantité de films.

On peut par exemple, classifier ou rechercher des films d'une base de données de films selon les signatures de ces films. Plus particulièrement, on peut regrouper des films ayant des caractéristiques proches en les comparant entre eux. Autrement dit, on rentre un ensemble de films inconnus et on sort un ensemble de catégories incluant les films de chaque catégorie.

Par ailleurs, on peut mémoriser un certain profil de film (exemple, film d'action) à partir de quelques exemples de films d'action connus. Ce profil sert ensuite de filtre pour identifier les films proches de ce profil.

Il est aussi possible d'utiliser des techniques d'apprentissage comme les réseaux de neurones qui permettent des performances importantes en terme de détection d'associations, par exemple, on peut détecter si un film est de type film d'action ou de romance.

Ainsi, pour la détermination de la signature d'un film selon la présente invention, on ne considère que des images sélectionnées chronologiquement sans référence au plan ce qui est très rapide à identifier. L'échantillonnage statistique d'événements permet d'avoir une approche systématique et simple d'un point de vue algorithmique qui fait économiser des ressources de traitements importantes. Par ailleurs, la forte cohérence interne des films permet de se satisfaire d'un échantillonnage très limité.

Ainsi, la présente invention permet de réaliser une indexation vidéo très rapide. Ceci permet de réaliser une indexation en quasi temps réel ou à la volée (par exemple, pour un flux de vidéos «stream video») ainsi que l'utilisation de l'indexation dans des services sur terminaux légers (par exemple, téléphones multifonctions « smart phones ») comme la recherche de vidéo par l'exemple de type « visualseek ».

Par ailleurs, on notera que le dispositif 1 de traitement d'images de la figure unique peut être mis en oeuvre par un système informatique comportant de manière classique une unité centrale de traitement commandant par des signaux une mémoire, une unité d'entrée et une unité de sortie raccordées entre elles par des bus de données.

De plus, ce système informatique peut être utilisé pour exécuter un programme d'ordinateur comportant des instructions de codes de programme pour la mise en oeuvre du procédé de traitement d'images selon l'invention.

En effet, l'invention vise aussi un produit programme d'ordinateur téléchargeable depuis un réseau de communication comprenant des instructions de codes de programme pour l'exécution des étapes du procédé de traitement d'images selon l'invention lorsqu'il est exécuté sur un ordinateur. Ce programme d'ordinateur peut être stocké sur un support lisible par ordinateur et peut être exécutable par un microprocesseur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

## Revendications

1. Méthode de traitement d'images pour déterminer au moins une signature d'un film, **caractérisé en ce qu'**elle comporte les étapes suivantes :
- sélectionner de manière chronologique une suite d'images (I₁₁, I₁₂,...I_{PN}) dudit film,
- évaluer des écarts relatifs à au moins un descripteur correspondant à une propriété physique entre des images consécutives afin d'obtenir des écarts visuels primaires,
- calculer des différences entre lesdits écarts visuels primaires pour déterminer des écarts visuels secondaires (ES_{1,1,1},...,ES_{1,1,N-2}),
- calculer des différences entre lesdits écarts visuels secondaires pour déterminer des écarts visuels tertiaires (ET_{1,1,N-3}, ET_{1,1,N-3}), et
- déterminer une moyenne et un écart type des écarts visuels primaires, secondaires, et tertiaires pour obtenir la signature (S₁) du film.

2. Méthode selon la revendication 1, **caractérisé en ce que** la suite d'images comporte un nombre P déterminé de groupes d'images (G₁,..., G_{P}) selon un taux de couverture prédéterminé du film, chaque groupe d'images comportant un nombre N prédéterminé d'images.

3. Méthode selon la revendication 2, dans laquelle,
- pour chaque groupe de N images :
- on évalue N écarts visuels primaires,
- à partir desdits N écarts visuels primaires, on calcule N-1 écarts visuels secondaires,
- à partir des N-1 écarts visuels secondaires, on calcule N-2 écarts visuels tertiaires,
- on détermine une moyenne et un écart type des écarts visuels primaires, secondaires, et tertiaires à partir des N écarts visuels primaires, N-1 secondaires, et N-2 tertiaires obtenus pour les P groupes d'images.

4. Méthode selon la revendication 2, **caractérisé en ce que** les groupes d'images (G₁,.., G_{P}) sont espacés entre eux selon un premier écart temporel (T₁), et **en ce que** les images dans chacun des groupes d'images sont espacées entre elles selon un second écart temporel (T₂).

5. Méthode selon la revendication 4, **caractérisé en ce que** le premier écart temporel est calculé pour chaque film en fonction de différents paramètres comportant la durée du film et le taux de couverture désiré et **en ce que** le second écart temporel est prédéfini et applicable à chaque film de manière identique.

6. Méthode selon la revendication 1, **caractérisé en ce que** ledit au moins un descripteur correspond à un descripteur de luminance, de mouvement, de forme géométrique, ou de couleur (D₁, D₂, D₃).

7. Méthode selon la revendication 6, **caractérisé en ce que** ledit au moins descripteur est l'un parmi les descripteurs suivants :
- descripteur de luminance permettant de calculer un écart visuel primaire entre deux images consécutives dans chaque groupe d'images d'un ratio entre le nombre de pixels sombres et le nombre de pixels clairs dans chaque image,
- descripteur de mouvement permettant de calculer un écart visuel primaire correspondant à un recouvrement de contours ou de formes dominantes entre deux images consécutives dans chaque groupe d'images, et
- descripteur d'ambiance permettant de calculer un écart visuel primaire correspondant à une variation de couleur entre deux images consécutives dans chaque groupe d'images.

8. Dispositif de traitement d'images pour déterminer au moins une signature d'un film, **caractérisé en ce qu'**il comporte :
- des moyens de sélection (3) pour sélectionner de manière chronologique une suite d'images (I₁₁, I₁₂,...I_{PN}) dudit film,
- des moyens d'évaluation (5) agencés pour évaluer des écarts relatifs à au moins un descripteur correspondant à une propriété physique entre des images consécutives afin d'obtenir des écarts visuels primaires,
- des moyens de calcul (7) agencés pour calculer des différences entre lesdits écarts visuels primaires pour déterminer des écarts visuels secondaires (ES_{1,1,1},....,ES_{1,1,N-2}),
- des moyens de calcul (7) agencés pour calculer des différences entre lesdits écarts visuels secondaires pour déterminer des écarts visuels tertiaires (ET_{1,1,N-3}, ET_{1,1,N-3}), et
- des moyens de détermination (7) agencés pour déterminer une moyenne et un écart type des écarts visuels primaires, secondaires, et tertiaires pour obtenir la signature (S₁) du film.

9. Programme d'ordinateur comportant des instructions de code de programme pour la mise en oeuvre du procédé de traitement d'images selon la revendication 1, lorsque ledit programme est chargé et exécuté dans un ordinateur ou un système informatique.

10. Support d'informations lisibles par un ordinateur sur lequel est enregistré un programme d'ordinateur comprenant des instructions pour l'exécution des étapes du procédé de traitement d'images selon la revendication 1.

## Claims

1. Method for processing images to determine at least one signature of a film, **characterized in that** it comprises the following steps:
- chronologically selecting a series of images (I₁₁, I₁₂,...I_{PN}) of said film,
- assessing deviations relating to at least one descriptor corresponding to a physical property between consecutive images in order to obtain primary visual deviations,
- calculating differences between said primary visual deviations to determine secondary visual deviations (ES_{1,1,1}, ..., ES_{1,1,N-2}),
- calculating differences between said secondary visual deviations to determine tertiary visual deviations (ET_{1,1,N-3}, ET_{1,1,N-3}), and
- determining a mean and a standard deviation of the primary, secondary and tertiary visual deviations to obtain the signature (S₁) of the film.

2. Method according to Claim 1, **characterized in that** the series of images comprised a determined number P of image groups (G₁,...,G_{P}) according to a predetermine rate of coverage of the film, each image group comprising a predetermined number N of images.

3. Method according to Claim 2, in which,
- for each group of N images:
- N primary visual deviation are assessed,
- from said N primary visual deviations, N-1 secondary visual deviations are calculated,
- from the N-1 secondary visual deviations, N-2 tertiary visual deviations are calculated,
- a mean and a standard deviation of the primary, secondary and tertiary visual deviations are determined from the N primary, N-1 secondary and N-2 tertiary visual deviations obtained for the P image groups.

4. Method according to Claim 2, **characterized in that** the image groups (G₁,...,G_{P}) are spaced apart according to a first time deviation (T₁), and **in that** the images in each of the image groups are spaced apart according to a second time deviation (T₂).

5. Method according to Claim 4, **characterized in that** the first time deviation is calculated for each film according to various parameters comprising the duration of the film and the desired rate of coverage and **in that** the second time deviation is predefined and applicable to each film in an identical manner.

6. Method according to Claim 1, **characterized in that** said at least one descriptor corresponds to a luminance, motion, geometrical shape or colour descriptor (D₁, D₂, D₂).

7. Method according to Claim 6, **characterized in that** said at least one descriptor is one of the following descriptors:
- luminance descriptor that can be used to calculate a primary visual deviation between two consecutive images in each image group of a ratio between the number of dark pixels and the umber of light pixels in each image,
- motion descriptor that can be used to calculate a primary visual deviation corresponding to an overlap of contours or of dominant shapes between two consecutive images in each image group, and
- ambiance descriptor that can be used to calculate a primary visual action corresponding to a colour variation between two consecutive images in each image group.

8. Device for processing images to determine at least one signature of a film, **characterized in that** it comprises:
- selection means (3) for chronologically selecting a series of images (I₁₁, I₁₂, ...I_{PN}) of said film,
- assessment means (5) arranged to assess deviations relating to at least one descriptor corresponding to a physical property between consecutive images in order to obtain primary visual deviations,
- calculation means (7) arranged to calculate differences between said primary visual deviations to determine secondary visual deviations (ES_{1,1,1},..., ES_{1,1,N-2}),
- calculation means (7) arranged to calculate differences between said secondary visual deviations to determine tertiary visual deviations (ET_{1,1,N-3}, ET_{1,1,N-3}), and
- determination means (7) arranged to determine a mean and a standard deviation of the primary, secondary and tertiary visual deviations to obtain the signature (S₁) of the film.

9. Computer grogram comprising program code instructions for implementing the image processing method according to Claim 1, when said program is loaded and run in a computer or an IT system.

10. Computer-readable information tedium on which is stored a computer grogram comprising instructions for the execution of the steps of the image processing method according to Claim 1.

## Patentansprüche

1. Bildverarbeitungsverfahren, um mindestens eine Signatur eines Films zu bestimmen, **dadurch gekennzeichnet, dass** es die folgenden Schritte aufweist:
- chronologische Auswahl einer Bildfolge (I₁₁, I₁₂, ..., I_{PN}) des Films,
- Ermittlung von Abweichungen bezüglich mindestens eines Deskriptors entsprechend einer physikalischen Eigenschaft zwischen aufeinanderfolgenden Bildern, um primäre visuelle Abweichungen zu erhalten,
- Berechnung von Differenzen zwischen den primären visuellen Abweichungen, um sekundäre visuelle Abweichungen (ES_{1,1,1}, ..., ES_{1,1,N-2}) zu bestimmen,
- Berechnung von Differenzen zwischen den sekundären visuellen Abweichungen, um tertiäre visuelle Abweichungen (ET_{1,1,1N-3}, ET_{1,1,N-3}) zu bestimmen, und
- Bestimmung eines Mittelwerts und einer Standardabweichung der primären, sekundären und tertiären visuelle Abweichungen, um die Signatur (S₁) des Films zu erhalten.

2. Verfahren nach Anspruch 1, **dadurch gekennzeichnet, dass** die Bildfolge eine bestimmte Anzahl P von Bildgruppen (G₁, ..., G_{P}) gemäß einem vorbestimmten Abdeckungsgrad des Films aufweist, wobei jede Bildgruppe eine vorbestimmte Anzahl N von Bildern aufweist.

3. Verfahren nach Anspruch 2, bei dem
- für jede Gruppe von N Bildern:
- N primäre visuelle Abweichungen ermittelt werden,
- ausgehend von den N primären visuellen Abweichungen N-1 sekundäre visuelle Abweichungen berechnet werden,
- ausgehend von den N-1 sekundären visuellen Abweichungen N-2 tertiäre visuelle Abweichungen berechnet werden,
- ein Mittelwert und eine Standardabweichung der primären, sekundären und tertiären visuellen Abweichungen ausgehend von den N primären, N-1 sekundären, und N-2 tertiären visuellen Abweichungen bestimmt werden, die für die P Bildgruppen erhalten wurden.

4. Verfahren nach Anspruch 2, **dadurch gekennzeichnet, dass** die Bildgruppen (G₁, ..., G_{P}) zwischen sich einen Abstand (T₁) gemäß eine ersten zeitlichen Abweichung haben, und dass die Bilder in jeder der Bildgruppen zwischen sich einen Abstand (T₂) gemäß einer zweiten zeitlichen Abweichung haben.

5. Verfahren nach Anspruch 4, **dadurch gekennzeichnet, dass** die erste zeitliche Abweichung für jeden Film in Abhängigkeit von verschiedenen Parametern berechnet wird, die die Dauer des Films und den gewünschten Abdeckungsgrad enthalten, und dass die zweite zeitliche Abweichung vordefiniert und an jeden Film in gleicher Weise anwendbar ist.

6. Verfahren nach Anspruch 1, **dadurch gekennzeichnet, dass** der mindestens eine Deskriptor einem Leuchtdichte-, Bewegung-, geometrischen Form- oder Farb-Deskriptor (D₁, D₂, D₃) entspricht.

7. Verfahren nach Anspruch 6, **dadurch gekennzeichnet, dass** der mindestens eine Deskriptor einer der folgenden Deskriptoren ist:
- Leuchtdichte-Deskriptor, der es ermöglicht, eine primäre visuelle Abweichung zwischen zwei aufeinanderfolgenden Bildern in jeder Bildgruppe eines Verhältnisses zwischen der Anzahl von dunklen Pixeln und der Anzahl von hellen Pixeln in jedem Bild zu berechnen,
- Bewegungs-Deskriptor, der es ermöglicht, eine primäre visuelle Abweichung entsprechend einer Abdeckung von Konturen oder dominanten Formen zwischen zwei aufeinanderfolgenden Bildern in jeder Bildgruppe zu berechnen, und
- Umgebungs-Deskriptor, der es ermöglicht, eine primäre visuelle Abweichung entsprechend einer Farbänderung zwischen zwei aufeinanderfolgenden Bildern in jeder Bildgruppe zu berechnen.

8. Bildverarbeitungsvorrichtung zur Bestimmung mindestens einer Signatur eines Films, sie aufweist:
- Auswahleinrichtungen (3), um chronologisch eine Bildfolge (I₁₁, I₁₂, ..., I_{PN}) des Films auszuwählen,
- Ermittlungseinrichtungen (5), die eingerichtet sind, um Abweichungen bezüglich mindestens eines Deskriptors entsprechend einer physikalischen Eigenschaft zwischen aufeinanderfolgenden Bildern zu ermitteln, um primäre visuelle Abweich ungen zu erhalten,
- Recheneinrichtungen (7), die eingerichtet sind, um Differenzen zwischen den primären visuellen Abweichungen zu berechnen, um sekundäre visuelle Abweichungen (ES_{1,1,1}, ..., ES_{1,1,N-2}) zu bestimmen,
- Recheneinrichtungen (7), die eingerichtet sind, um Differenzen zwischen den sekundären visuellen Abweichungen zu berechnen, um tertiäre visuelle Abweichungen (ET_{1,1,N-3}, ET_{1,1,N-3}) zu bestimmen, und
- Bestimmungseinrichtungen (7), die eingerichtet sind, um einen Mittelwert und eine Standardabweichung der primären, sekundären und tertiären visuellen Abweichungen zu bestimmen, um die Signatur (S₁) des Films zu erhalten.

9. Computerprogramm, das Pogrammcodeanweisungen zur Durchführung des Bildverarbeitungsverfahrens nach Anspruch 1 aufweist, wenn das Programm in einen Computer oder Informatiksystem geladen und ausgeführt wird.

10. Träger computerlesbarer Informationen, auf dem ein Computerprogramm aufgezeichnet ist, das Anweisungen zur Ausführung der Schritte des Bildverarbeitungsverfahrens nach Anspruch 1 enthält.
